Europäisches Patentamt

European Patent Office

Office européen des brevets

(19)

(11) Numéro de publication: **0 374 562**
**A1**

(12) # DEMANDE DE BREVET EUROPEEN

(21) Numéro de dépôt: 89122310.9

(51) Int. Cl.⁵: **H04B 7/00, H04J 3/07**

(22) Date de dépôt: **04.12.89**

(30) Priorité: 08.12.88 FR 8816137

(43) Date de publication de la demande:
27.06.90 Bulletin 90/26

(84) Etats contractants désignés:
**BE DE ES FR GB IT NL SE**

(71) Demandeur: **ALCATEL TRANSMISSION PAR FAISCEAUX HERTZIENS A.T.F.H.**
**55, rue Greffulhe**
**F-92301 Levallois-Perret Cédex(FR)**

(84) **DE ES FR GB IT NL SE**

Demandeur: **ALCATEL N.V.**
**Strawinskylaan 341**
**NL-1077 XX Amsterdam(NL)**

(84) **BE**

(72) Inventeur: **Szczepanowski, Serge**
**25, rue de l'Orée du Bois**
**F-95000 Vaureal(FR)**
Inventeur: **De Leon, Eric**
**1, impasse des Platanes**
**F-95220 Herblay(FR)**

(74) Mandataire: **Weinmiller, Jürgen et al**
**Lennéstrasse 9 Postfach 24**
**D-8133 Feldafing(DE)**

(54) Dispositif de commutation d'un train binaire sur un autre.

(57) L'invention concerne un dispositif de commutation d'un train binaire, et de son horloge vers un autre couple train binaire-horloge. comprenant les mêmes composants que ceux utilisés dans un dispositif de traitement dit "de justification positive" d'un train binaire.

Application notamment du domaine des faisceaux hertziens.

FIG.2

Xerox Copy Centre

### Dispositif de commutation d'un train binaire sur un autre.

L'invention concerne un dispositif de commutation d'un train binaire sur un autre.

Dans les transmissions par faisceaux hertziens numériques on utilise une mesure du taux d'erreur de bit pour estimer la qualité d'une liaison. Si la qualité est mauvaise l'information est envoyée sur un canal de secours. Il est, alors, important de ne pas détériorer le contenu du message lors d'une commutation du canal normal sur le canal secours.

La détérioration de la qualité d'une liaison étant relativement lente, on profite de ce temps de répit pour essayer de mettre le train du canal secours en synchronisme avec le train du canal qui se détériore. Après quoi on effectue une commutation de l'un à l'autre non perceptible par l'utilisateur.

Un dispositif de l'art connu, décrit dans le brevet français n° 2600474 publié le 26 août 1988, permet de réaliser la synchronisation de deux trains binaires en vue de faire une commutation d'un train sur l'autre en utilisant une plage de synchronisation allant d'une premier position d'une mémoire tampon, dans laquelle est mémorisé le train qui est dirigé vers la sortie, pour laquelle la lecture suit l'écriture à un bit près à une deuxième position de ladite mémoire pour laquelle la lecture précède l'écriture à un bit près. Pour ce faire, ce dispositif de l'art connu comprend deux mémoires tampon à N positions dans lesquelles sont emmagasinés les deux trains, deux dispositifs de blocage de l'écriture dans ces mémoires, une logique de synchronisation, une boucle à verrouillage de phase qui comprend un comparateur de phase, un filtre passe-bas, un VCO ("voltage control oscillator") et un diviseur par N rebouclé sur une première entrée du comparateur de phase, la seconde entrée de ce comparateur étant reliée, grâce à un commutateur, à l'une des horloges associées aux deux trains après leur passage dans deux diviseurs par N. Un "OU exclusif", qui reçoit les trains binaires lus dans les deux mémoires tampon et qui est relié à la logique de synchronisation, permet une comparaison bit à bit de ces trains binaires. Un deuxième commutateur permet de diriger l'un de ces trains lus vers la sortie binaire. La logique de synchronisation étant reliées aux deux dispositifs de blocage d'écriture, aux deux commutateurs, et au comparateur de phase.

L'objet de l'invention est de résoudre de façon simple le problème ainsi posé.

L'invention propose, à cet effet, un dispositif de commutation d'un train binaire et de son horloge vers un autre couple train binaire-horloge, caractérisé en ce qu'il comprend les mêmes composants que ceux utilisés dans un dispositif de traitement dit "de justification positive" d'un train binaire.

Avantageusement dans le dispositif de l'invention, la fonctionnalité générale de l'organe de commutation sans coupure est inchangée, mais l'approche qui en est faite permet l'emploi de composants qui étaient optimisés à d'autres tâches.

L'utilisation continuelle des systèmes de justification a imposé aux équipementiers l'abandon de solutions à composants discrets pour des composants à haute intégration (prédiffusés, précaractérisés) qui ont la fonctionnalité requise. Ces composants existent donc et peuvent remplacer toux ceux qui sont nécessaires à la génération de décalages de trains en vue de leur commutation.

Ceci est d'autant plus vrai que l'on demande des plages de mise en coïncidence très importantes, associées à des débits à commuter de plus en plus élevés.

Les caractéristiques et avantages de l'invention ressortiront de la description qui va suivre, à titre d'exemple non limitatif, en référence aux dessins annexés sur lesquels :

- la figure 1 illustre un schéma synoptique de la partie réception d'un organe de déjustification ;

- la figure 2 représente le dispositif de l'invention ;

- la figure 3 illustre un chronogramme du fonctionnement du dispositif représenté à la figure 2.

Dans le cas d'une transmission par bonds de type faisceaux hertziens, pour éviter de répercuter vers l'aval des problèmes existant en amont, tels que des microcoupures on utilise un principe dit de justification positive.

Dans le cas de l'application de ce principe lors de l'émission d'un train binaire, ce train binaire associé à son horloge est écrit dans une mémoire tampon, de profondeur plus ou moins importante. La lecture de cette mémoire est réalisée par l'horloge locale, cette dernière ayant au moins une fréquence légèrement supérieure à la plus grande fréquence incidente possible, pour éviter les erreurs de relecture. Un doublement de l'information est autorisé à des instants particuliers imposés par une base de temps. Cette dernière génère également une structure de trame et insère un mot de synchronisation pour localiser ces instants particuliers dans le signal binaire émis.

La partie de réception localise les instants caractéristiques par la recherche du mot de synchronisation. La structure de trame ayant été régénérée, les instants de justification et d'autorisation de justification sont connus, et une mémoire tampon se charge du retrait du bit doublé par retrait d'une période de l'horloge d'écriture et de la commande d'un organe permettant la génération et le lissage de l'horloge de lecture.

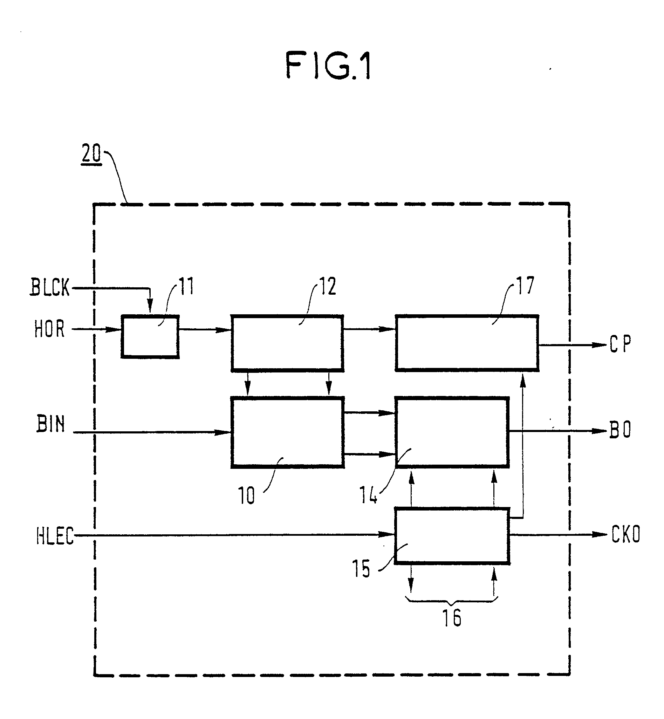

Dans le schéma synoptique d'un organe de déjustification 20, tel que représenté à la figure 1 seule la partie réception est représentée dans le système de commutation proposé.

Le train binaire BIN incident associé à son horloge HOR est inscrit dans une mémoire tampon au rythme de son horloge qui est amputé, par la bascule 11 qui reçoit des impulsions de trous d'horloge BLCK, d'un nombre de fronts actifs suffisants pour n'inscrire dans la mémoire tampon que les bits valides et non ceux liés à la structure de trame ou ceux de justification.

Cette mémoire tampon est suivie par un organe de démultiplexage 10 du train incident piloté par un diviseur par n 12 de l'horloge d'écriture et par un remultiplexeur 14 piloté par un diviseur par n 15 muni d'accès de synchronisation 16 associé à l'horloge de lecture HLEC.

L'horloge de lecture HLEC est asservie à l'horloge d'écriture HOR par un comparateur de phase interne 17 qui pilote une boucle à verrouillage de phase générant cette horloge.

On obtient alors en sortie une information de comparaison CP entre les horloges d'écriture HOR et de lecture HLEC, un train binaire de sortie BO, et une horloge après décalage CKO.

L'objet de l'invention est de permettre une commutation sans erreur d'un couple train binaire-horloge sur un autre, sans perte d'information. En effet, dans les systèmes de transmission par faisceaux hertziens, certain nombre de canaux appelés normaux peuvent être sécurisés par un canal appelé canal de secours. Si l'un de ces canaux normaux est déclaré défectueux, une logique de commutation impose un cheminement de ce canal normal sur le canal de secours en parallèle avec le cheminement normal de ce canal normal.

En réception il y a donc deux informations identiques, l'une cheminant par la voie normale et entachée d'erreurs, l'autre supposée correcte sur laquelle on doit commuter. Leur différence ne se limite pas à une différence de contenu binaire, mais à un décalage dans le temps qui peut être important (plusieurs périodes d'horloge par exemple). Il convient donc avant toute commutation de les remettre en coincidence. Cette fonction peut être réalisée par un système de démultiplexage-remultiplexage identique au système précédemment décrit. Le train binaire incident est alors décalé grâce à un ordre de blocage BLCK qui retarde l'écriture, la lecture s'effectuant de manière continue pour permettre un traitement en parallèle des trains démultiplexés, lorsque le débit incident est trop élevé pour la technologie employée ou lorsque la plage de mise en phase est très grande. On synchronise les compteurs d'écriture des différents blocs de déjustifications pour permettre une lecture des différents canaux par les mêmes horloges de remultiplexage. On synchronise également les compteurs de lecture des différents blocs de déjustifications.

De plus, ces différents accès sont utilisés pour permettre une comparaison de phase des horloges de lecture et d'écriture plus optimisée pour une utilisation dans un organe de commutation.

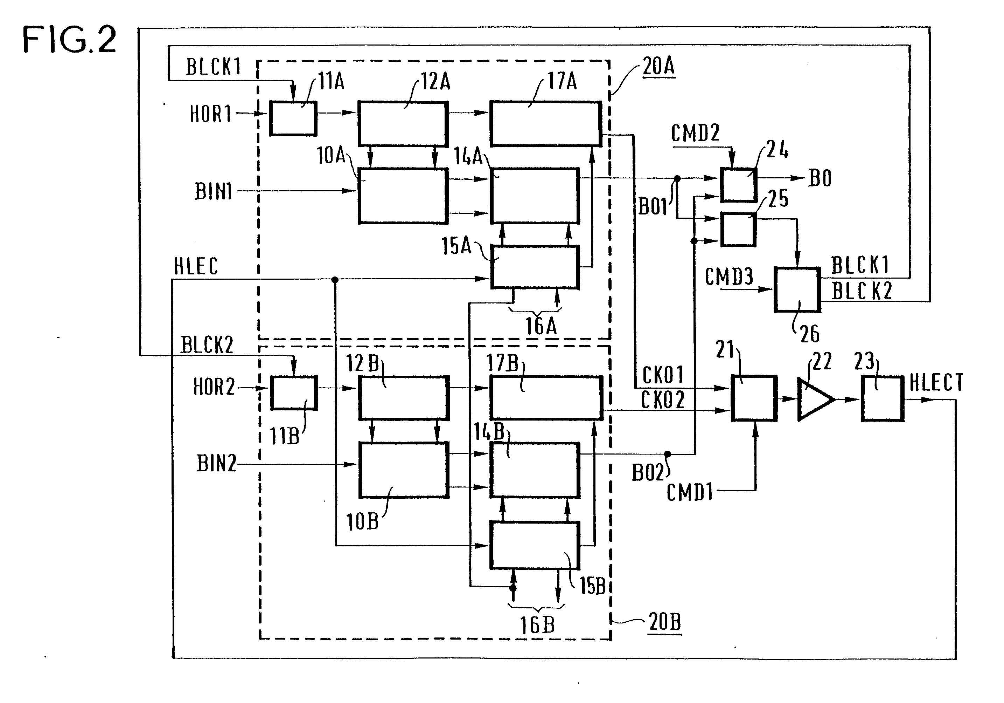

L'utilisation des composants liés à la déjustification, est réalisée dans le dispositif de commutation selon l'invention tel que représenté sur la figure 2, dans lequel on peut commuter un couple train binaire BIN1 et horloge HOR1 sur un couple train binaire BIN2 et horloge HOR2 à la réception d'un ordre de commutation CMD.

Dans le dispositif représenté à la figure 2, on retrouve deux circuits 20A et 20B identiques à celui représenté à la figure 1 ; chacun de ces deux circuits étant affecté à l'un des couples train binaire (BIN1 ou BIN2) - horloge (HOR1 ou HOR2).

Le dispositif de l'invention comporte, en outre, une boucle de verrouillage de phase qui reçoit les deux signaux horloges CK01 et CK02 en sortie des circuits 20A et 20B. Cette boucle comporte un premier commutateur 21 qui reçoit un signal de commande CMD1, suivi d'un amplificateur 22 et d'un oscillateur 23 qui délivre le signal horloge HLEC qui est rebouclé en entrée.

Le dispositif de l'invention comprend, de plus, un second commutateur 24 qui reçoit les deux trains binaires B01 et B02 en sortie des circuits 20A et 20B et un signal de commande CMD2 ; ce commutateur 24 délivrant le signal binaire de sortie BO. Il comprend également un comparateur 25 de ces trains B01 et B02 qui est relié à un commutateur 26, qui reçoit un signal de commande CMD3 et qui délivre les deux signaux de commande BLCK1 et BLCK2.

La commande CMD1 impose à la boucle à verrouillage de phase un fonctionnement basé sur l'horloge HOR1.

La commande CMD2 impose que le train sortant BO soit celui lié au circuit 20A soit BO1.

Mais on peut comparer ce signal B01 à celui qui sort du bloc 20B soit BO2. S'il y a identité de ces trains B01 et B02 au sens du critère choisi, (moins de 4 divergences dans 1000 bits par exemple) il y aura alors commutation par CMD1 puis par CMD2 de l'horloge et du train binaire utilisé pour être utilisé comme signaux de sortie.

S'il n'y a pas identité, le signal permettant l'effacement d'un front utile d'horloge va être émis vers le circuit 20A ou 20B qui n'est pas utilisé, au travers du commutateur 26 commandé par le signal CMD3, soit le signal BLCK1, ou BLCK2.

Le critère d'égalité est alors étudié. Ce cycle se poursuivra pour investiguer les N décalages possibles. Si ce critère n'est pas obtenu après ces N décalages, un ordre de surpassement est alors généré pour imposer la commutation : Cela correspond à un taux d'erreur important par exemple de $10^{-4}$ à $10^{-3}$ ; on n'effectue alors plus de comparaison et on perd la synchronisation.

Le dispositif de l'invention peut être utilisé dans toutes les systèmes de commutation sans erreurs, ainsi que dans les organes de commutations en bande de base utilisée en diversité d'espace.

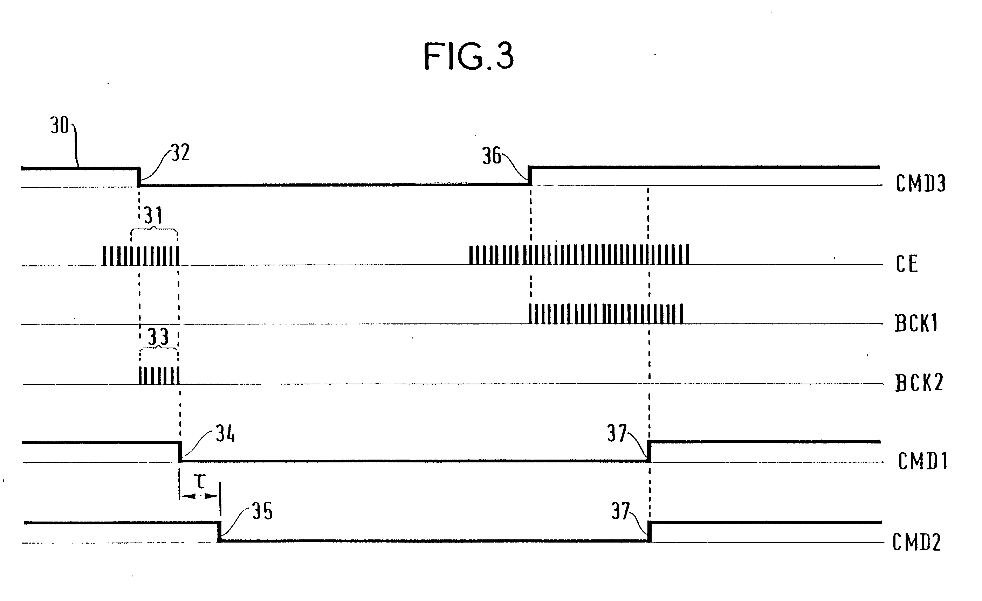

Si l'on considère le chronogramme représenté sur la figure 3, on a :
* Dans un état initial : Le signal sortant transite sur le canal 1(zone 30).
- Le signal B0 correspond au signal BIN1 grâce à la commande du signal CMD2.
- Le signal horloge HLEC est synchronisée par le signal horloge HOR1 grâce à la commande du signal CMD1.
* Le signal transitant sur le canal 1 devient entaché d'erreurs (impulsions de divergence en 31 sur le critère d'égalité). Il y a demande de commutation sur le canal 2. Le signal CMD3 passe à 0, en 32, mais la commutation n'est pas réalisée immédiatement.
* Les impulsions de divergence, après remise en forme, sont aiguillées sur BLCK2 (33) par CMD3 pour réaliser la fonction de retrait d'un front actif d'horloge d'écriture et donc un décalage d'écriture dans la mémoire tampon. Le critère d'égalité choisi impose des impulsions de décalage tant que ce critère n'est pas obtenu. Lorsque ce critère est obtenu, il y a changement de l'horloge qui synchronisait la boucle à verrouillage de phase par la commande CMD1 (34).
* Après un laps de temps $\tau$, dépendant des caractéristiques de la boucle à verrouillage. on commute le binaire qui va être relu par l'horloge précédente. grâce à signal CMD2 (35).
* On a alors le signal BO qui correspond au signal BIN2 et l'horloge HLEC est synchronisée par l'horloge HOR2 ; la commutation est alors effective.

La partie droite du chronogramme présente la commutation du canal 2 sur le canal 1 (point 36) dans le cas où l'égalité n'a pu être réalisée après un temps choisi, par suite de taux d'erreurs trop important sur le canal à commuter.

Il y a alors surpassement et commutation du canal défectueux sur l'autre canal (point 37).

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Ainsi la génération d'une commutation de plusieurs trains binaires ayant la même horloge peut se faire en mettant en parallèle des blocs de déjustifications et en synchronisant leurs différents compteurs d'écriture.

## Revendications

1/ Dispositif de commutation d'un train binaire, et de son horloge vers un autre couple train binaire-horloge, caractérisé en ce qu'il comprend les mêmes composants que ceux utilisés dans un dispositif de traitement dit "de justification positive" d'un train binaire.

2/ Dispositif selon la revendication 1, caractérisé en ce qu'il comprend deux circuits identiques (20A, 20B), chacun de ces circuits étant affecté à l'un des couples train binaire (BIN1, BIN2) - horloge (HOR1, HOR2).

3/ Dispositif selon la revendication 2, caractérisé en ce qu'il comprend une boucle de verrouillage de phase qui reçoit les deux signaux horloges (CK01 et CK02) en sortie des deux circuits identiques (20A, 20B), cette boucle comportant un premier commutateur (21) qui reçoit un signal de commande (CMD1), suivi d'un amplificateur (22) et d'un oscillateur (23) qui délivre un signal horloge (HLEC) qui est rebouclé en entrée des deux circuits identiques.

4/ Dispositif selon l'une quelconque des revendications 2 ou 3, caractérisé en ce qu'il comprend un commutateur (24) qui reçoit les deux trains binaires (B01, B02) en sortie des deux circuits (20A, 20B) et un signal de commande (CMD2), et qui délivre le signal binaire de sortie (BO).

5/ Dispositif selon l'une quelconque des revendications 2 à 4, caractérisé en ce qu'il comprend un comparateur (25) des trains de sortie (B01, B02) des deux circuits (20A, 20B), qui est relié à un commutateur (26) qui reçoit un signal de commande (CMD3) et qui délivre deux signaux de commande (BLCK1, BLCK2) desdits deux circuits (20A, 20B).

# FIG.1

# FIG.2

EP 0 374 562 A1

# FIG.3

EP 0 374 562 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 249 930 (ALCATEL THOMSON FAISCEAUX HERTZIENS) <br> * Revendications; figures * <br> --- | 1-5 | H 04 B 7/00 <br> H 04 J 3/07 |
| A | FR-A-2 399 163 (SOCIETE ANONYME DE TELECOMMUNICATIONS) <br> * Revendication 1; figures 1-8 * <br> --- | 1-5 | |
| A | US-A-4 511 859 (DOMBROWSKI) <br> * Abstract; figure 1 * <br> --- | 3 | |
| A | FR-A-2 304 146 (CIT-ALCATEL) <br> * Page 2, ligne 33 - page 4, ligne 23 * <br> --- | 1,3-5 | |
| A | DE-A-3 511 352 (SIEMENS) <br> * Page 10, ligne 20 - page 11, ligne 35 * <br><br> ----- | 1,2 | |

| | DOMAINES TECHNIQUES RECHERCHES (Int. Cl.5) |
|---|---|
| | H 04 B . <br> H 04 L <br> H 04 J |

Le présent rapport a été établi pour toutes les revendications

| Lieu de la recherche | Date d'achèvement de la recherche | Examinateur |
|---|---|---|
| LA HAYE | 14-03-1990 | VAN DEN BERG,J.G.J. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur. mais publié à la
   date de dépôt ou après cette date
D : cité dans la demande
L : cité pour d'autres raisons
..............................................................................
& : membre de la même famille, document correspondant

EPO FORM 1503 03.82 (P0402)